**Europäisches Patentamt**

**European Patent Office**

**Office européen des brevets**

(11) Veröffentlichungsnummer: **0 270 996**
**A2**

(12) **EUROPÄISCHE PATENTANMELDUNG**

(21) Anmeldenummer: **87117861.2**

(51) Int. Cl.4: **H02B 1/20**

(22) Anmeldetag: **03.12.87**

(30) Priorität: **12.12.86 DE 3642519**

(43) Veröffentlichungstag der Anmeldung:
**15.06.88 Patentblatt 88/24**

(84) Benannte Vertragsstaaten:
**AT CH DE GB IT LI NL SE**

(71) Anmelder: **Rittal-Werk Rudolf Loh GmbH & Co. KG**
**Auf dem Stützelberg**
**D-6348 Herborn(DE)**

(72) Erfinder: **Wagener, Hans**
**Rittershauser Strasse 14**
**D-6344 Dietzhölztal 2(DE)**
Erfinder: **Münch, Udo**
**Wetzlarer Strasse 41**
**D-6349 Sinn(DE)**
Erfinder: **Zachrei, Jürgen**
**Am Hungersberg 2**
**D-6341 Dillenburg 8(DE)**

(74) Vertreter: **Vogel, Georg**
**Hermann-Essig-Strasse 35**
**D-7141 Schwieberdingen(DE)**

(54) **Einspeiseadapter für ein Sammelschienensystem.**

(57) Die Erfindung betrifft einen Einspeiseadapter für ein Sammelschienensystem zum elektrisch leitenden Verbinden von Einspeiseleitungen mit den Sammelschienen. Die Anschaltung der Einspeiseleitungen an beliebigen Stellen der Sammelschienen wird bei eindeutiger elektrischer Verbindung ohne Bohrungen in den Sammelschienen dadurch erreicht, daß in einem auf die Sammelschienen aufsetzbaren Adaptergehäuses auf die Sammelschiene ausgerichtet jeweils eine Kontaktplatte gehalten ist, daß jede Kontaktplatte mittels einer Klemmeinrichtung elektrisch leitend mit der zugeordneten Sammelschiene verbindbar ist, wobei eine U-förmige Klammer mit an den freien Enden der Seitenschenkel angeformten Klemmenden die Sammelschiene hintergreift und eine in einer Gewindebohrung im Steg der Klammer verstellbare Klemmschraube die Sammelschiene mit der Kontaktplatte verspannt und daß die Kontaktplatten außerhalb des Klemmbereiches der Klammer mit Gewindebohrungen und/oder Bohrungen zum Anschrauben der Einspeiseleitungen versehen sind.

FIG.1

## Einspeiseadapter für ein Sammelschienensystem

Die Erfindung betrifft einen Einspeiseadapter für ein Sammelschienensystem zum elektrisch leitenden Verbinden von Einspeiseleitungen mit den Sammelschienen.

Der Anschluß der Einspeiseleitungen an den Sammelschienen eines Sammelschienensystems bereitet immer dann Schwierigkeiten, wenn der Einspeisepunkt an beliebiger Stelle in Längsrichtung einer Sammelschiene gewünscht wird. Dies setzt zusätzliche Montageleistungen am Einsatzort voraus, da in die Sammelschienen nachträglich Bohrungen eingebracht werden müssen, um die Einspeiseleitungen mit den Sammelschienen verschrauben und dabei elektrisch leitend miteinander verbinden zu können. Da das nachträgliche Einbringen von Bohrungen auch den Querschnitt der Sammelschiene schwächt, vermag diese Art des Anschlusses der Einspeiseleitungen an Sammelschienen eines Sammelschienensystems nicht zu befriedigen.

Es ist Aufgabe der Erfindung, einen Einspeiseadapter der eingangs erwähnten Art zu schaffen, der ohne Bohrungen in den Sammelschienen an beliebiger Stelle in Längsrichtung der Sammelschienen befestigt werden kann und dabei stets eindeutige elektrische Verbindungen zwischen den Einspeiseleitungen und den Sammelschienen herstellt.

Diese Aufgabe wird nach der Erfindung dadurch gelöst, daß in einem auf die Sammelschienen aufsetzbaren Adaptergehäuses auf die Sammelschienen abgestimmt jeweils eine Kontaktplatte gehalten ist, daß jede Kontaktplatte mittels einer Klemmeinrichtung elektrisch leitend mit der zugeordneten Sammelschiene verbindbar ist, wobei eine U-förmige Klammer mit an den freien Enden der Seitenschenkel angeformten Klemmenden die Sammelschiene hintergreift und eine in einer Gewindebohrung im Steg der Klammer verstellbare Klemmschraube die Sammelschiene mit der Kontaktplatte verspannt und daß die Kontaktplatten außerhalb des Klemmbereiches der Klammer mit Gewindebohrungen und/oder Bohrungen zum Anschrauben der Einspeiseleitungen versehen sind.

Die Kontaktplatten sind schon in der richtigen Zuordnung zu den Sammelschienen des Sammelschienensystems in dem Adaptergehäuse gehalten. Beim Aufsetzen des Adaptergehäuses auf die Sammelschienen werden die Klemmenden der Klammern der Klemmeinrichtungen hinter den Sammelschienen eingehakt. Mit dem Anziehen der Klemmschrauben der Klemmeinrichtungen werden die Kontaktplatten mit den zugeordneten Sammelschienen fest ve spannt, so daß elektrische Verbindungen mit großflächigen Übergängen, d.h. kleinen Kontaktübergangswiderständen, entstehen. Die Einspeiseleitungen können in bekannter Weise verschraubt werden ud zwar außerhalb der Klemmbereiche der Klammern mit den Kontaktplatten. Ist eine Verschraubung nicht richtig festgezogen, dann kann sich ein Funkenübergang bilden, der aber nur zur Beschädigung der leicht austauschbaren Kontaktplatte führt, die Sammelschiene aber nicht angreift.

Bei einer mehrphasigen Ausführung des Einspeiseadapters ist aus Isolationsgründen vorgesehen, daß das Adaptergehäuse im wesentlichen aus einer auf die Sammelschienen auflegbaren Gehäuseplatte mit auf die Verteilung der Sammelschienen abgestimmten Ausnehmungen besteht und daß mittels senkrecht zu den Sammelschienen stehenden Seitenwänden und Trennwänden auf der Oberseite der Gehäuseplatte getrennte Kammern für die zu den Kontaktplatten in den Ausnehmungen führenden Einspeiseleitungen abgeteilt sind. Die strom-und spannungsführenden Teile sind nach Phasen eindeutig voneinander isoliert, so daß versehentliche Kurzschlüsse praktisch ausgeschaltet sind.

Die Festhaltung der Kontaktplatten in den Ausnehmungen des Adaptergehäuses wird nach einer Ausgestaltung so gelöst, daß die Kontaktplatten mittels Auflageansätzen und/oder Auflagestegen abgestützt sind, die an den die Ausnehmungen begrenzenden Wandteilen angeformt sind und daß die Kontaktplatten mittels Stützfedern in dieser Auflagestellung unverschiebbar gehalten sind, die an einem die Ausnehmung teilweise überdeckenden Kappenteil angeformt sind. Dabei ist bevorzugt vorgesehen, daß die Kontaktplatten rechteckförmig ausgebildet und mit ihren Längsseiten senkrecht zu den Sammelschienen ausgerichtet sind und daß die Auflageansätze und/oder die Auflagestege die Schmalseiten der Kontaktplatten stützen.

Da die Sammelschienen je nach Nennstromstärke unterschiedliche Breite aufweisen können, sieht eine weitere Ausgestaltung für einen universellen Einsatz des Einspeiseadapters vor, daß der leichte Abstand der beiden Seitenschenkel der Klammer gleich oder größer ist als die Breite der Kontaktplatten und daß der Abstand der Klemmenden der Seitenschenkel von dem Steg der Klammer gleich oder größer ist als die Summe aus der Dicke einer Kontaktplatte und der maximalen Dicke einer Sammelschiene.

Der Halt der Klammer an der Sammelschiene wird in Verbindung mit der Verbesserung der Kontaktgabe dadurch erreicht, daß die der Sammelschiene zugekehrten Schmalseiten der Klemmenden der Seitenschenkel der Klammer mit einer Verzahnung versehen sind.

Damit die Klemmeinrichtung aus Klammer und Klemmschraube die Lage zu der im Adaptergehäuse festgehaltenen Kontaktplatte auch bei von den Sammelschienen abgenommenem Einspeiseadapter beibehält, sieht eine Ausgestaltung vor, daß auf der der Klammer zugekehrten Unterseite des Kappenteils ein hülsenförmiger Führungsansatz mit Bohrung angeformt ist, der die über die Bohrung zugängliche Klemmschraube aufnimmt.

Ist weiterhin vorgesehen, daß das Kappenteil über dem Auflageansatz für die Kontaktplatte mit einer im Querschnitt entsprechenden Aussparung versehen ist, dann kann unterhalb des Kappenteils der Auflageansatz angeformt werden, ohne für die Herstellung des Adaptergehäuses aus Kunststoff ein kompliziertes Spritzgußwerkzeug mit Schiebern verwenden zu müssen, da über die Aussparung ein den Hinterschnitt des Auflageansatzes bildender Stempel eingeführt werden kann.

Eine eindeutige Einhängestellung für den Einspeiseadapter beim Aufsetzen auf die Sammelschienen ergibt sich nach einer Ausgestaltung dadurch, daß die Ausnehmungen auf einer parallel zu den Sammelschienen verlaufenden und mit den Abdeckkappen zusammenfallenden Seite mit Anlagestegen für die Sammelschienen versehen sind, die senkrecht zu der Gehäuseplatte und parallel zu den Sammelschienen verlaufen.

Für den Anschluß der Einspeiseleitungen an die Kontaktplatten gibt es verschiedene Möglichkeiten. So sieht eine Ausgestaltung vor, daß die Einspeiseleitung mit einem Kabelschuh abgeschlossen ist, dessen als Öse ausgebildete Anschlußfahne mittels einer Schraube mit der mit einer Gewindebohrung versehenen Kontaktplatte verschraubt ist, während eine andere Ausgestaltung vorsieht, daß die Einspeiseleitung als Flachkontakt mit Bohrung ausläuft, der mittels einer U-förmigen Klemmplatte und einer Klemmschraube mit der mit einer Gewindebohrung versehenen Kontaktplatte verschraubt ist. Der Anschluß kann jedoch auch so erfolgen, daß das abisolierte Aderende einer Einspeiseleitung mittels einer Klemmplatte und zwei Schrauben an der mit zwei Gewindebohrungen oder zwei Bohrungen versehenen Kontaktplatte verklemmt ist.

Der unbeabsichtigte Zugang zu strom-oder spannungsführenden Teilen des Einspeiseadapters wird dadurch verhindert, daß das Adaptergehäuse zwischen den Seitenwänden mittels einer U-förmigen Deckwand abdeckbar ist, die mit Steckansätzen versehen ist, die in Steckaufnahmen von Verbindungsstegen des Adaptergehäuses einsteckbar sind.

Die Erfindung wird anhand eines in den Zeichnungen dargestellten Ausführungsbeispiels näher erläutert. Es zeigt:

Fig. 1 einen dreiphasigen Einspeiseadapter in Draufsicht und

Fig. 2 einen Längsschnitt durch den Einspeiseadapter, der durch zwei Kammern führt.

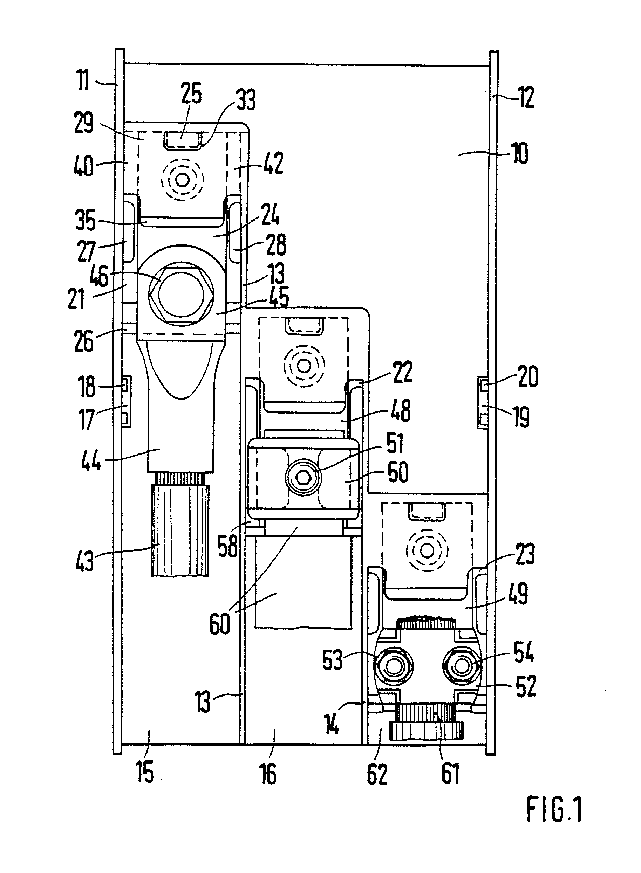

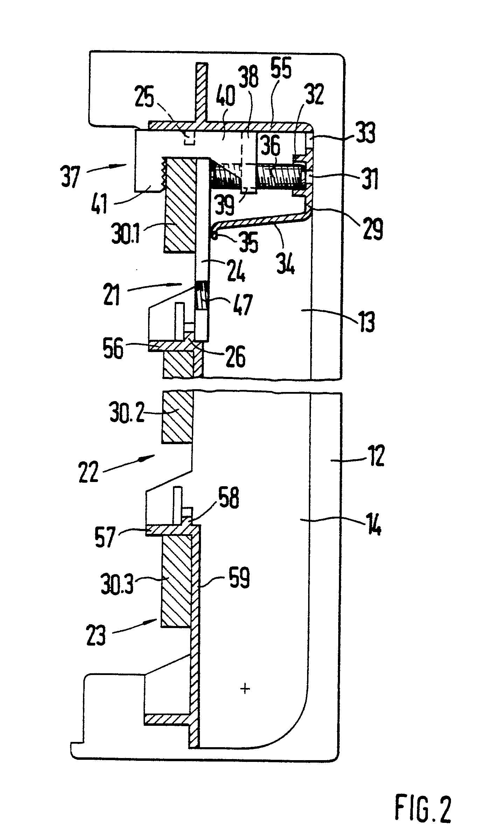

Bei dem in den Fig. 1 und 2 dargestellten Ausführungsbeispiel eines Einspeiseadapters bildet das Adaptergehäuse 10 einen wesentlichen Bestandteil. Das Adaptergehäuse 10 wird als Kunststoff-Spritzgußteil hergestellt und weist die Gehäuseplatte 59 auf, in der die Ausnehmungen 21, 22 und 23 eingebracht sind und zwar in den Kammern 15, 16 und 62, welche durch die Seitenwände 11 und 12 sowie die Trennwände 13 und 14 auf der Oberseite der Grundplatte 59 abgeteilt sind. Wie Fig. 1 zeigt, sind die Ausnehmungen 21, 22 und 23 in einer Anordnung, die der Anordnung der Sammelschienen 30.1, 30.2 und 30.3 des Sammelschienensystems entspricht. Die Ausnehmungen 21, 22 und 23 sind im wesentlichen rechteckförmig und mit ihren Längsseiten senkrecht zu den Sammelschienen 30.1, 30.2 und 30.3 ausgerichtet und nehmen die rechteckförmigen Kontaktplatten 24, 48 und 49 auf. Diese Kontaktplatten 24, 48 und 49 sind unverschiebbar in den Ausnehmungen 21, 22 und 23 so gehalten, daß ihre Unterseiten freiliegen und mit den Sammelschienen verbunden werden können.

Wie Fig. 2 erkennen läßt, sind die Kontaktplatten 24, 48 und 49 an ihren Schmalseiten mit ihren Unterseiten auf Auflageansätzen 25 und Auflagestegen 26 bzw. 58 abgestützt. Auf den Oberseiten der Kontaktplatten 24, 48 und 49 stützen sich Stützfedern 34 mit ihren Enden 35 ab und halten so die Kontaktplatten 24, 48 und 49 unverschiebbar in den Ausnehmungen 21, 22 und 23 fest. Die Stützfedern 34 sind an Kappenteilen 29 angeformt, die die Kontaktplatten 24, 48 und 49 an einer Schmalseite teilweise überdecken. Die Kappenteile 29 sind über Wände 55, 56, 57 und der Gehäuseplatte 59 verbunden und stehen als Anlagestege senkrecht an der Unterseite der Gehäuseplatte 59 ab. Diese Anlagestege verlaufen parallel zu den Sammelschienen 30.1, 30.2 und 30.3 und bilden Anlageflächen, wenn das Adaptergehäuse 10 auf die Sammelschienen 30.1, 30.2 und 30.3 aufgebracht wird, wie Fig. 2 zeigt.

Jeder Kontaktplatte 24, 48 und 49 ist eine Klemmeinrichtung zugeordnet, die eine U-förmige Klammer 37 und eine Klemmschraube 36 umfaßt. Der Steg 38 der Klammer 37 weist die Gewindebohrung 39 auf, in die die Klemmschraube 36 eingeschraubt ist. Die Seitenschenkel 40 und 42 der Klammer 37 haben einen lichten Abstand der gleich oder größer ist als die Breite der Kontaktplatte 24, 48 bzw. 49, so daß diese seitlich an der Kontaktplatte 24, 48 bzw. 49 vorbei aus der Ausnehmung 21, 22 bzw. 24 herausgeführt werden. An den freien Enden der Seitenschenkel 40 und 42 der Klammer 37 sind hakenförmige Klemmenden 41 angeformt, die die Sammelschiene 30.1, 30.2 bzw. 30.3 hintergreifen und auf den der Sammelschiene zugekehrten Schmalseite eine Verzahnung tragen. Die Klemmschraube 36 ist mit dem Betätigungsende in dem hülsenförmigen Führungsansatz 32 des Kappenteils 29 gehalten, wobei die Bohrung 31 den Zugang zu der Werkzeugaufnahme in der Stirnseite der Klemmschraube 36 freigibt. Über dem Auflageansatz 25 ist das Kappenteil 29 mit der querschnittsgleichen Aussparung 33 versehen, um einen Stempel einführen zu können, der in der Spritzgußform den Hinterschnitt für den Auflageansatz 25 bildet. Das andere Ende der Klemmschraube 36 stützt sich auf der Oberseite der Kontaktplatte 24, 48 bzw. 49 ab. Wird die Klemmschraube 36 angezogen, dann wird die Klammer 37 in Richtung zum Kappenteil 29 verstellt, wobei die Klemmenden 41 gegen die Sammelschiene 30.1, 30.2 bzw. 30.3 gedruckt wird. Auf diese Weise wird die Kontaktplatte 24, 48 bzw. 49 großflächig an der Sammelschiene verspannt. Dies wirkt sich in einem sehr kleinen Kontaktübergangswiderstand aus. Dabei wird gleichzeitig auch das Adaptergehäuse 10 mechanisch auf den Sammelschienen befestigt.

Die Kontaktplatten 24, 48 und 49 sind auf diese Weise elektrisch leitend mit den zugeordneten Sammelschienen 30.1, 30.2 und 30.3 verbunden und liegen mit den nicht von den Kappenteilen 29 überdeckten Bereichen frei zugänglich in den Kammern 15, 16 und 62.

Wie Fig. 2 zeigt, kann die Kontaktplatte 24 in diesem freiliegenden Bereich die Gewindebohrung 47 aufweisen, so daß auf einfache Weise mittels der Schraube 46 die ösenförmige Anschlußplatte 45 des Kabelschuhes 44 mit der Kontaktplatte 24 verschraubt werden kann. Der Kabelschuh 44 ist mit dem abisolierten Ende der Einspeiseleitung 43 verbunden.

Ist die Einspeiseleitung selbst als Flachkontakt 60 ausgebildet, dann wird die Klemmplatte 50 und die Klemmschraube 51 verwendet, um den mit einer Bohrung versehenen Flachkontakt 60 direkt an der Kontaktplatte 48 anzuschrauben. Die Klemmplatte 50 ist dabei U-förmig und umgreift den Flachkontakt 60 und die Kontaktplatte 48 auf beiden Seiten. Die Klemmeinrichtung für die Kontaktplatte 48 und die Festlegung der Kontaktplatte 48 in der Ausnehmung 22 unterscheidet sich nicht von der Klemmeinrichtung und der Festlegung der Kontaktplatte 24.

Wie in der Kammer 62 gezeigt ist, kann das abisolierte Ende 61 der Einspeiseleitung mittels der Klemmplatte 52 und zwei Schrauben 53 und 54 mit der Kontaktplatte 49 verbunden werden. Die Klemmplatte 52 hat zwei Bohrungen für die Schrauben 53 und 54, die direkt in Gewindebohrungen der Kontaktplatte 49 eingeschraubt werden können. Die Kontaktplatte 49 kann aber auch nur zwei Bohrungen wie die Klemmplatte 52 aufweisen. Die Schraubverbindungen werden dann durch Muttern vervollständigt.

Wie die Fig. 2 zeigt, sind die Trennwände 13 und 14 nicht so hoch wie die Seitenwände 11 und 12. An den Innenseiten der Seitenwände 11 und 12 sind die Verbindungsstege 17 und 19 mit den Steckaufnahmen 18 und 20 angeformt, so daß die Kammern 15, 16 und 62 mittels eines U-förmigen Deckels abgedeckt werden können. Gehalten wird der Deckel mit Steckansätzen, die in die Steckaufnahmen 18 und 20 eingeführt werden. Die Seitenwände 11 und 12 können im Bereich der Schmalseiten des Adaptergehäuses 10 über die Unterseite der Gehäuseplatte 59 hinaus verlängert werden, um das Aufsetzen des Einspeiseadapters auf die Sammelschienen zu erleichtern. Im Bereich der Ausnehmungen 21, 22 und 23 sind die Seitenwände 11 und 12 unterhalb der Gehäuseplatte 59 so weit ausgespart, daß die Klemmenden 41 der Klammern 37 an den Sammelschienen eingehängt werden können, wobei die Anlagestege 55, 56 und 57 die Einhängestellung definieren.

Bei dem Ausführungsbeispiel des Einspeiseadapters handelt es sich um eine Ausgestaltung für drei Phasen eines Sammelschienensystems. Es liegt auch im Rahmen der vorliegenden Erfindung, das Adaptergehäuse nur für eine Kontaktplatte mit zugeordneter Klemmeinrichtung auszulegen. Dann werden für ein dreiphasiges Sammelschienensystem eben drei derartige, einfache Einspeiseadapter benötigt. Auch können die Kontaktplatten des Einspeiseadapters mehrere Anschlußmöglichkeiten für verschiedene Einspeiseleitungen aufweisen.

Bei einem Sammelschienensystem können unterschiedlich dicke und unterschiedlich breite Sammelschienen eingesetzt sein. Um den Einspeiseadapter universell einsetzbar zu machen, ist nach einer Weiterbildung vorgesehen, daß der Verstellbereich der Klammern an die maximale Dicke der Sammelschienen des Sammelschienensystems angepaßt ist und daß das Adaptergehäuse auf seiner Unterseite im Bereich der Klammern Ausnehmungen aufweist, deren Breite der maximalen Breite der Sammelschienen plus der Breite der Klemmenden der Klammern entspricht.

Soll der Einspeiseadapter auch für Sammelschienensysteme mit unterschiedlichem Abstand der Sammelschienen eingesetzt werden, dann ist darüber hinaus vorgesehen, daß die Klammern gegenüber den Kontaktplatten verstellbar und auf unterschiedliche Abstände der Sammelschienen des Sammelschienensystems einstellbar sind.

**Ansprüche**

1. Einspeiseadapter für ein Sammelschienensystem zum elektrisch leitenden Verbinden von Einspeiseleitungen mit den Sammelschienen,
dadurch gekennzeichnet,
daß in einem auf die Sammelschienen (30.1 bis 30.3) aufsetzbaren Adaptergehäuses (10) auf die Sammelschienen (30.1; 30.2; 30.3) ausgerichtet jeweils eine Kontaktplatte (24,48,49) gehalten ist, daß jede Kontaktplatte (24,48,49) mittels einer Klemmeinrichtung elektrisch leitend mit der zugeordneten Sammelschiene (30.1 bzw. 30.2 bzw. 30.3) verbindbar ist, wobei eine U-förmige Klammer (37) mit an den freien Enden der Seitenschenkel (40,42) angeformten Klemmenden (41) die Sammelschiene (30.1; 30.2; 30.3) hintergreift und eine in einer Gewindebohrung (39) im Steg (38) der Klammer (37) verstellbare Klemmschraube (36) die Sammelschiene (30.1; 30.2; 30.3) mit der Kontaktplatte (24,48,49) verspannt, und daß die Kontaktplatten (24,48,49) außerhalb des Klemmbereiches der Klammer (37) mit Gewindebohrungen - (47) und/oder Bohrungen zum Anschrauben der Einspeiseleitungen (43) versehen sind.

2. Einspeiseadapter nach Anspruch 1,
dadurch gekennzeichnet,
daß das Adaptergehäuse (10) im wesentlichen aus einer auf die Sammelschienen (30.1 bis 30.3) auflegbaren Gehäuseplatte (59) mit auf die Verteilung der Sammelschienen (30.1 bis 30.3) abgestimmten Ausnehmungen (21,22,23) besteht und daß mittels senkrecht zu den Sammelschienen (30.1 bis 30.3) stehenden Seitenwänden (11,12) und Trennwänden (13,14) auf der Oberseite der Gehäuseplatte (59) getrennte Kammern (15,16,62) für die zu den Kontaktplatten (24,48,49) in den Ausnehmungen (21,22,23) führenden Einspeiseleitungen (43) abgeteilt sind.

3. Einspeiseadapter nach Anspruch 1 oder 2,
dadurch gekennzeichnet,
daß die Kontaktplatten (24,48,49) mittels Auflageansätzen (25) und/oder Auflagestegen (26) abgestützt sind, die an den die Ausnehmungen (21,22,23) begrenzenden Wandteilen angeformt sind und daß die Kontaktplatten (24,48,49) mittels Stützfedern (34) in dieser Auflagestellung unverschiebbar gehalten sind, die an einem die Ausnehmung (21,22,23) teilweise überdeckenden Kappenteil (29) angeformt sind.

4. Einspeiseadapter nach einem der Ansprüche 1 bis 3,
dadurch gekennzeichnet,
daß die Kontaktplatten (24,48,49) rechteckförmig ausgebildet und mit ihren Längsseiten senkrecht zu den Sammelschienen (30.1; 30.2; 30.3) ausgerichtet sind und

daß die Auflageansätze (25) und/oder die Auflagestege (26) die Schmalseiten der Kontaktplatten (24,48,49) stützen.

5. Einspeiseadapter nach einem der Ansprüche 1 bis 4,
dadurch gekennzeichnet,
daß der leichte Abstand der beiden Seitenschenkel (40,42) der Klammer (37) gleich oder größer ist als die Breite der Kontaktplatten (24,48,49) und daß der Abstand der Klemmenden (41) der Seitenschenkel (40,42) von dem Steg (38) der Klammer (37) gleich oder größer ist als die Summe aus der Dicke einer Kontaktplatte (24,48,49) und der maximalen Dicke einer Sammelschiene (30.1; 30.2; 30.3).

6. Einspeiseadapter nach Anspruch 5,
dadurch gekennzeichnet,
daß die der Sammelschiene (30.1; 30.2; 30.3) zugekehrten Schmalseiten der Klemmenden (41) der Seitenschenkel (40,42) der Klammer (37) mit einer Verzahnung versehen sind.

7. Einspeiseadapter nach einem der Ansprüche 3 bis 6,
dacurch gekennzeichnet,
daß auf der der Klammer (37) zugekehrten Unterseite des Kappenteils (29) ein hülsenförmiger Führungsansatz (32) mit Bohrung (33) angeformt ist, der die über die Bohrung (33) zugängliche Klemmschraube (36) aufnimmt.

8. Einspeiseadapter nach einem der Ansprüche 3 bis 7,
dadurch gekennzeichnet,
daß das Kappenteil (29) über dem Auflageansatz (25) für die Kontaktplatte (24,48,49) mit einer im Querschnitt entsprechenden Aussparung (33) versehen ist.

9. Einspeiseadapter nach einem der Ansprüche 1 bis 8,
dadurch gekennzeichnet,
daß die Ausnehmungen (21,22,23) auf einer parallel zu den Sammelschienen (30.1; 30.2; 30.3) verlaufenden und mit den Abdeckkappen (29) zusammenfallenden Seite mit Anlagestegen (56,57) für die Sammelschienen (30.1; 30.2; 30.3) versehen sind, die senkrecht zu der Gehäuseplatte (59) und parallel zu den Sammelschienen (30.1; 30.2; 30.3) verlaufen.

10. Einspeiseadapter nach einem der Ansprüche 1 bis 9,
dadurch gekennzeichnet,
daß die Einspeiseleitung (43) mit einem Kabelschuh (44) abgeschlossen ist, dessen als Ose ausgebildete Anschlußfahne (45) mittels einer Schraube (46) mit der mit einer Gewindebohrung (47) versehenen Kontaktplatte (24) verschraubt ist.

11. Einspeiseadapter nach einem der Ansprüche 1 bis 9,
dadurch gekennzeichnet,

daß die Einspeiseleitung als Flachkontakt (60) mit Bohrung ausläuft, der mittels einer U-förmigen Klemmplatte (50) und einer Klemmschraube (51) mit der mit einer Gewindebohrung (47) versehenen Kontaktplatte (48) verschraubt ist.

12. Einspeiseadapter nach einem der Ansprüche 1 bis 9,
dadurch gekennzeichnet,
daß das abisolierte Adernende einer Einspeiseleitung mittels einer Klemmplatte (52) und zwei Schrauben (53,54) an der mit zwei Gewindebohrungen oder zwei Bohrungen versehenen Kontaktplatte (49) verklemmt ist.

13. Einspeiseadapter nach einem der Ansprüche 1 bis 12,
dadurch gekennzeichnet,
daß das Adaptergehäuse (10) zwischen den Seitenwänden (11,12) mittels einer U-förmigen Deckwand abdeckbar ist, die mit Steckansätzen versehen ist, die in Steckaufnahmen (18,20) von Verbindungsstegen (17,19) des Adaptergehäuses (10) einsteckbar sind.

14. Einspeiseadapter nach einem der Ansprüche 1 bis 13,
dadurch gekennzeichnet,
daß der Verstellbereich der Klammern (37) an die maximale Dicke der Sammelschienen (30.1, 30.2, 30.3) des Sammelschienensystems angepaßt ist, und daß das Adaptergehäuse (10) auf seiner Unterseite im Bereich der Klammern (37) Ausnehmungen (21,22,23) aufweist, deren Breite der maximalen Breite der Sammelschienen (30.1, 30.2, 30.3) plus der Breite der Klemmenden (41) der Klammern (37) entspricht.

15. Einspeiseadapter nach einem der Ansprüche 1 bis 14,
dadurch gekennzeichnet,
daß die Klammern (37) gegenüber den Kontaktplatten (24,48,49) verstellbar und auf unterschiedliche Abstände der Sammelschienen (30.1, 30.2, 30.3) des Sammelschienensystems einstellbar sind.

FIG.1

FIG.2